Europäisches Patentamt

European Patent Office

Office européen des brevets

(19)

(11) Numéro de publication: **0 116 252**
**A1**

## (12) DEMANDE DE BREVET EUROPEEN

(21) Numéro de dépôt: **83402554.6**

(22) Date de dépôt: **28.12.83**

(51) Int. Cl.³: **A 01 C 11/02**

(30) Priorité: **28.12.82 FR 8221952**

(43) Date de publication de la demande:
**22.08.84 Bulletin 84/34**

(84) Etats contractants désignés:
**BE DE GB IT NL SE**

(71) Demandeur: **REGERO, Société Anonyme dite:**
**16 Rue de l'Allemagne Fédérale Case Postale 1807**
**F-44084 Nantes Cedex(FR)**

(72) Inventeur: **Germaine, Michel**
**3, Sente des Bûcherons**
**F-76350 Oissel(FR)**

(74) Mandataire: **Casalonga, Axel et al,**
**BUREAU D.A. CASALONGA OFFICE JOSSE & PETIT**
**Baaderstrasse 12-14**
**D-8000 München 5(DE)**

(54) Machine de plantation de mottes.

(57) Machine de plantation de mottes comprenant un châssis mobile, un soc pour creuser un sillon, un moyen de mise en place des mottes une à une dans le sillon et un moyen pour refermer le sillon autour des mottes.

Le moyen de mise en place des mottes comprend, à l'arrière du soc (4), une fourchette (8) dont les dents sont orientées de façon sensiblement horizontale en opposition au sens d'avancement (A) de la machine, cette fourchette (8) étant animée d'un mouvement alternatif entre une première position dans laquelle les dents de la fourchette sont situées au-dessus du fond du sillon et une seconde position dans laquelle les dents de la fourchette sont légèrement enfoncées dans le fond du sillon.

Application : notamment aux production maraîchères et horticoles.

EP 0 116 252 A1

./...

0116252

FIG.1

Machine de plantation de mottes.

La présente invention se rapporte à une machine de plantation de mottes ou plus précisément de plants en mottes.

L'ensemencement dans des mottes de compost est une technique qui s'est considérablement développée depuis quelques années dans le domaine des productions maraîchères et horticoles. Les mottes de compost constituent un milieu de germination de qualité exceptionnelle pour les graines. Ces mottes, après ensemencement, sont placées dans des serres dans un environnement idéal pour la germination des graines et le développement des plants.

Après développement, les plants sont mis en place en pleine terre avec les mottes dans lesquelles ils ont été développés, ce mode de transplantation assurant une reprise optimale des plants.

Les machines de plantation de mottes actuellement connues, qui sont soit de structure simple et rustique, mais d'emploi pénible, soit de structure complexe et coûteuse, présentent toutes l'inconvénient majeur que la mise en terre des mottes ne s'effectue pas avec toute la douceur requise, compte tenu de la fragilité des mottes.

La présente invention a pour objet une machine de plantation de mottes de structure simple, donc d'un coût réduit, assurant une mise en place avec douceur des mottes, évitant tout risque d'endommagement de ces dernières, tout en permettant un travail de plantation rapide.

La machine conforme à l'invention de plantation de mottes comprend un châssis mobile, un soc pour creuser un sillon, un moyen de mise en place des mottes une à une dans le sillon et un moyen pour refermer le sillon autour des mottes. Le moyen de mise en place des mottes comprend, à l'arrière du soc, une fourchette dont les dents parallèles sont orientées de façon sensiblement horizontale en opposition au sens d'avancement de la machine. Cette fourchette est animée d'un mouvement alternatif entre une première position dans laquelle les dents de la fourchette sont situées au-dessus du fond du sillon et une seconde position dans laquelle les dents de la fourchette sont légèrement enfoncées dans le fond du sillon.

Une motte à planter est posée sur les dents de la fourchette lorsque cette dernière occupe la première position, c'est-à-dire se trouve au-dessus du fond du sillon de plantation. La fourchette est ensuite abaissée sur le

2

fond du sillon. Lors de l'enfoncement des dents de la fourchette dans le fond du sillon, la motte ne repose plus sur la fourchette mais sur le fond du sillon et par suite de l'avancement de la machine, la fourchette se dégage naturellement de la motte en laissant la motte à la place à laquelle elle a été déposée par la fourchette.

Chaque motte est donc déposée sur le fond du sillon, non seulement avec douceur, mais également dans une position bien définie. Le moyen de refermeture du sillon autour des mottes qui est constitué, comme cela est connu, de préférence par deux roues de tassement inclinées, ne risque donc pas d'endommager les plants et/ou les mottes comme c'est le cas lorsque les mottes ont été déposées brutalement et/ou dans des positions incontrôlées.

La fourchette peut être animée par exemple d'un mouvement de pivotement autour d'un axe horizontal situé à l'opposé des extrémités libres des dents de la fourchette. Cependant, suivant un mode de réalisation préféré de l'invention, la fourchette est animée d'un mouvement alternatif de translation sensiblement perpendiculaire au plan des dents de la fourchette.

Des modes de commande très divers sont concevables pour la manoeuvre de la fourchette. Suivant un mode de réalisation simple de l'invention, la fourchette est reliée à une masse montée coulissante dans un tube de guidage sensiblement vertical, cette masse se déplaçant vers le bas sous l'action de son poids et étant déplacée vers le haut sous l'action d'une commande.

La commande servant à déplacer vers le haut la masse reliée à la fourchette comprend avantageusement un câble dont une extrémité est fixée à ladite masse et dont l'autre extrémité sortant dudit tube, à l'extrémité supérieure de ce dernier, est reliée à un moyen d'actionnement.

Le câble de commande peut être actionné par un opérateur, par exemple à l'aide d'une pédale ou d'une manette. Toutefois, suivant un mode de réalisation avantageux, le câble est actionné par un mécanisme à action alternative tel qu'un mécanisme à manivelle, commandé en fonction de l'avancement de la machine, par exemple par l'une des roues de tassement de la machine.

Pour empêcher la chute de la motte de la fourchette, entre le moment où la motte a été déposée sur cette dernière et le moment où la fourchette dépose la motte sur le fond du sillon, il est avantageux que la fourchette soit mobile dans un tube de protection ouvert à la partie supérieure, en vue de la mise en place des mottes sur la fourchette, et ouvert à sa partie inférieure à la fois vers le bas et vers le côté opposé au sens d'avancement de la machine, en vue de permettre à la fourchette de déposer correctement la motte sur le fond du sillon.

De préférence, les dents de la fourchette comprennent une partie sensiblement horizontale, destinée à soutenir les mottes, et sur le côté tourné dans le sens d'avancement de la machine, une partie sensiblement verticale, d'une hauteur au moins égale à la profondeur d'enfoncement des dents dans le fond du sillon.

Pour assurer un enfoncement régulier des dents de la fourchette dans le fond du sillon, il est avantageux que le soc qui ouvre le sillon comporte plusieurs patins de tassement qui sont orientés dans le sens d'avancement de la machine et dont chacun est aligné avec une dent de la fourchette.

En se référant au dessin annexé, on va décrire ci-après plus en détail un mode de réalisation illustratif et non limitatif d'une machine de plantation de mottes conforme à l'invention; sur le dessin :

la fig. 1 est une vue schématique en élévation latérale, partiellement en coupe, d'une machine conforme à l'invention;

la fig. 2 est une vue en perspective de la fourchette avec sa masse;

la fig. 3 est une coupe suivant III-III de la fig. 1, montrant la fourchette et la masse, l'une dans son tube de protection et l'autre dans son tube de guidage.

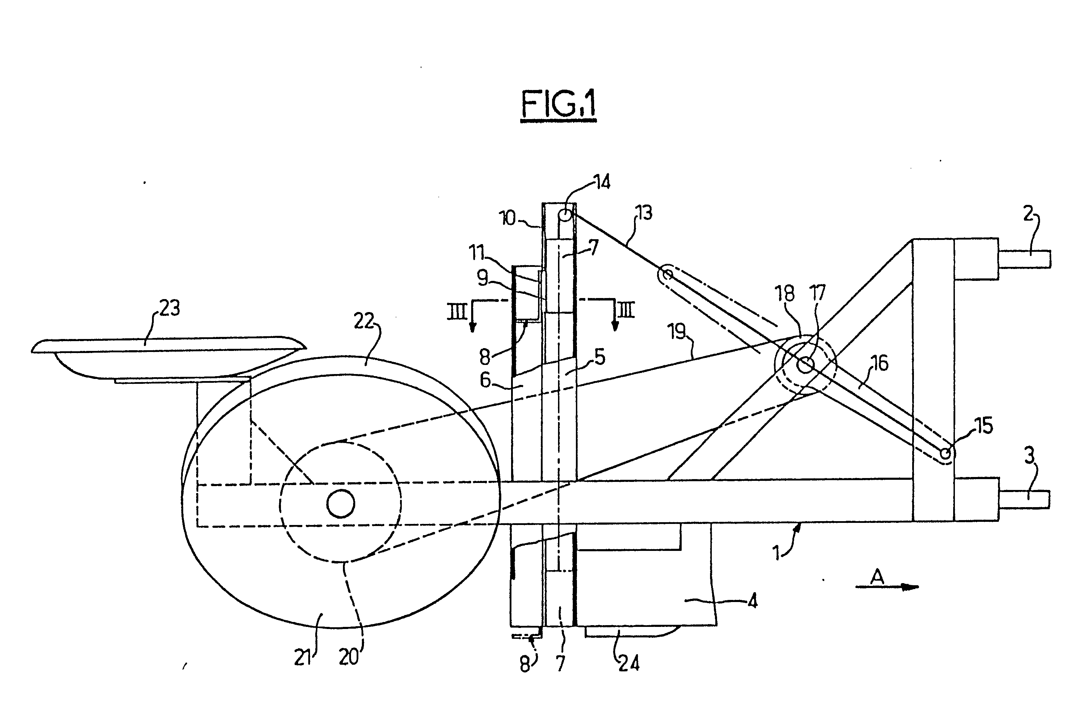

La machine de plantation de mottes telle qu'illustrée par la fig. 1 comprend un châssis référencé 1 dans son ensemble pourvu à l'avant d'un point d'attelage supérieur 2 médian et de deux points d'attelage inférieurs 3 latéraux pour le raccordement de la machine au système d'attelage à trois points d'un tracteur.

Le châssis 1 comporte, dans le bas, un soc 4 destiné à creuser un sillon pour la mise en terre des mottes à planter.

A proximité derrière le soc 4, deux tubes 5, 6 sont montés l'un derrière l'autre en position sensiblement verticale sur le châssis 1. Le tube 5 qui est situé à proximité derrière le soc 4 sert de guide à une masse 7. Le tube 6 qui est situé derrière le tube 5 entoure une fourchette 8 fixée à la masse 7. Le tube 6 est ouvert à sa partie supérieure. A la partie inférieure, le tube 6 est ouvert à la fois vers le bas et vers l'arrière, c'est-à-dire en opposition au sens d'avancement.

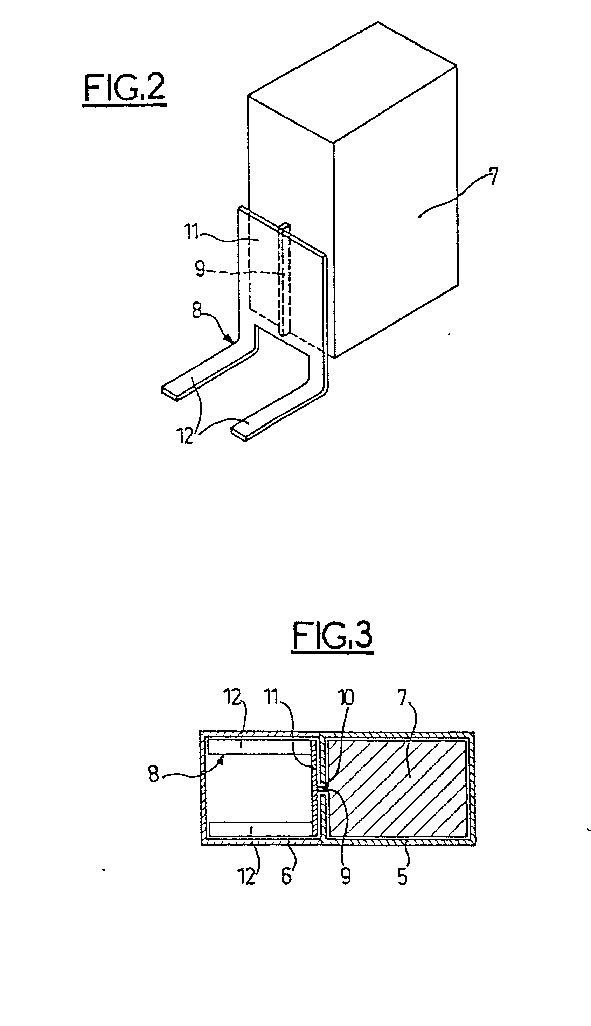

Comme le montre les fig. 2 et 3, la fourchette 8 est reliée à la masse 7 par une lame 9 verticale qui traverse une fente 10 ménagée entre les deux tubes 5 et 6, sur toute la longueur de ces tubes.

La fourchette 8 comprend une base 11 verticale fixée à la lame 9. Deux branches ou dents 12 font saillie de la base 11, d'abord sur une faible distance verticalement vers le bas, puis horizontalement en opposition au soc 4, c'est-à-dire en opposition au sens d'avancement de la machine, indiqué par une flèche A sur la fig. 1.

Comme le montre la fig. 2, le bord inférieur de la masse 7 se trouve à distance au-dessus des parties horizontales des dents 12. Cette distance correspond à la longueur des parties verticales des dents 12.

La masse 7 et la fourchette 8 sont animées d'un mouvement de va-et-vient dans les tubes 5 et 6, sous l'action d'un câble 13. Ce câble 13 dont une extrémité est fixée à la masse 7 passe sur une poulie de renvoi 14 montée à l'extrémité supérieure du tube 5, son autre extrémité étant reliée au maneton 15 d'un bras de manivelle 16 monté en rotation autour d'un axe horizontal 17 sur le châssis 1. Le bras de manivelle 16 est solidaire d'un pignon 18 accouplé par une chaîne 19 à un pignon 20 solidaire d'une roue 21. La roue 21 visible sur la fig. 1 est l'une des deux roues d'une paire de roues de tassement montées sur le châssis 1, en arrière du tube 6, de manière à rouler de part et d'autre du sillon creusé par le soc 4. Les deux roues 21 sont inclinées en V de manière que leurs bandes de roulement 22 referment le sillon creusé par le soc 4.

Un siège 23 est prévu au-dessus et en arrière des roues 21, pour un opérateur.

Il convient encore de remarquer que le soc 4 comporte, à sa partie inférieure, deux patins 24 longitudinaux, situés de part et d'autre du plan médian vertical du soc 4, à une distance réciproque correspondant à l'écartement des deux dents 12 de la fourchette 8.

Le fonctionnement de la machine illustrée par le dessin sera décrit ci-après.

Au cours de l'avancement de la machine dans le sens de la flèche A, la roue 21 roulant sur le sol entraîne en rotation le bras de manivelle 16, ce qui permet à l'ensemble masse-fourchette 8 d'effectuer un mouvement de va-et-vient dans les tubes 5, 6, entre une position haute indiquée en trait plein sur la fig. 1 et une position basse indiquée en trait mixte sur la fig. 1. L'amplitude de ce mouvement de va-et-vient, déterminée par la longueur du bras de manivelle 16, est telle qu'en position haute, les dents 12 de la fourchette 8 se trouvent à faible distance en dessous de l'extrémité supérieure ouverte du tube 6 et qu'en position basse, les dents 12 de la fourchette 8 dépassent vers le bas l'extrémité inférieure ouverte du tube 6 d'une distance correspondant sensiblement à la distance verticale entre le bord inférieur de la masse 7 et les parties horizontales des dents 12 de la fourchette 8. La masse 7 ne dépasse donc pas le tube 5 en position basse.

Lorsque l'ensemble masse-fourchette 7, 8 se trouve en position haute comme indiqué en trait plein sur la fig. 1, l'opérateur assis sur le siège 23 dépose un plant en motte non représenté sur la fourchette 8. La machine continuant d'avancer, la manivelle 16 tourne de la position indiquée en trait plein dans le sens des aiguilles d'une montre et permet ainsi à l'ensemble masse-fourchette 7, 8 et à la motte reposant sur la fourchette 8 de descendre jusqu'à la position indiquée en trait mixte, sous le poids de la masse 7. Lorsque les dents 12 de la fourchette 8 sortent vers le bas du tube 6, elles s'enfoncent légèrement dans le fond du sillon creusé par le soc 4, cet enfoncement étant favorisé par les petits sillons pratiqués par les patins 24. La motte qui, pendant le mouvement de descente reposait sur les dents 12 de la fourchette 8 vient alors porter sur la terre, entre les deux dents 12 de la fourchette. Du fait que la fourchette 8 continue d'avancer avec la machine, alors que la motte est en appui sur le terre, la fourchette se dégage naturellement de la motte en laissant cette dernière à l'endroit où elle a été déposée.

De préférence, le câble 13 a une longueur telle qu'il soit détendu en position basse de la fourchette 2, position dans laquelle par exemple la masse 7 bute sur le fond du tube 5. Cela permet de marquer un temps d'arrêt de la fourchette 2, afin que celle-ci se dégage de la motte.

Après ce dégagement de la fourchette de la motte, l'ensemble masse-fourchette 7, 8 est relevé et ramené à la position haute en vue de la mise en place d'une nouvelle motte sur la fourchette.

Les deux roues de tassement 21 referment le sillon creusé par le soc 4, en ramenant la terre autour de la motte.

Par un changement des deux pignons 18 et 20, il est possible de modifier le rapport de transmission entre la roue 21 et le bras de manivelle 16, c'est-à-dire de modifier l'intervalle de plantation des mottes.

Il y a lieu de noter que de nombreuses modifications et variantes peuvent être apportées à la machine de plantation de mottes telle que décrit ci-dessus et représentée sur le dessin annexé.

Ainsi, la commande de l'ensemble masse-fourchette 7, 8, au lieu de se faire automatiquement en fonction du mouvement d'avancement de la machinne, pourrait également se faire manuellement, par exemple sous l'action d'une pédale commandée par l'opérateur. Par ailleurs, d'autres commandes automatiques seraient également concevables, par exemple des commandes par vérin à la place de la commande par manivelle et par câble. L'utilisation d'un vérin à double effet permettrait, dans ce cas, de supprimer la masse 7.

Bien entendu, une machine de plantation pourrait être équipée de plusieurs ensembles de plantation placés côte à côte, par exemple quatre ensembles desservis par deux opérateurs, chaque opérateur étant susceptible d'alimenter deux ensembles.

Au lieu d'être attelée à un tracteur, la machine pourrait également comporter un châssis automoteur.

REVENDICATIONS

1. Machine de plantation de mottes, comprenant un châssis mobile, un soc pour creuser un sillon, un moyen de mise en place des mottes une à une dans le sillon et un moyen pour refermer le sillon autour des mottes, caractérisée par le fait que le moyen de mise en place des mottes comprend, à l'arrière du soc (4), une fourchette (8) dont les dents parallèles (12) sont orientées de façon sensiblement horizontale en opposition au sens d'avancement (A) de la machine, et que la fourchette (8) est animée d'un mouvement alternatif entre une première position dans laquelle les dents de la fourchette sont situées au-dessus du fond du sillon et une seconde position dans laquelle les dents de la fourchette sont légèrement enfoncées dans le fond du sillon.

2. Machine suivant la revendication 1, caractérisée par le fait que la fourchette (8) est animée d'un mouvement alternatif de translation sensiblement perpendiculaire au plan des dents (12) de la fourchette (8).

3. Machine suivant la revendication 2, caractérisée par le fait que la fourchette (8) est reliée à une masse (7) montée coulissante dans un tube de guidage (5) sensiblement vertical, cette masse se déplaçant vers le bas sous l'action de son poids et étant déplacée vers le haut sous l'action d'une commande (13 à 20).

4. Machine suivant la revendication 3, caractérisée par le fait que ladite commande comprend un câble (13) dont une extrémité est fixée à ladite masse (7) et dont l'autre extrémité, sortant dudit tube (5), à l'extrémité supérieure de ce dernier, est reliée à un moyen d'actionnement (15, 16, 17).

5. Machine suivant la revendication 4, caractérisée par le fait que ledit câble (13) est actionné par un mécanisme à action alternative commandé en fonction du déplacement de la machine.

6. Machine suivant la revendication 5, caractérisée par le fait que ledit mécanisme est constitué par un mécanisme à manivelle (15, 16, 17).

7. Machine suivant la revendication 5 ou 6, caractérisée par le fait que ledit mécanisme (15, 16, 17) est entraîné par les roues de tassement (21) de la machine, par l'intermédiaire d'une transmission à chaîne (18, 19, 20).

8. Machine suivant l'une quelconque des revendications 2 à 7, caractérisée par le fait que la fourchette (8) est mobile dans un tube de protection (6) ouvert à la partie supérieure en vue de la mise en place des mottes sur la fourchette (8) et ouvert à la partie inférieure à la fois vers le bas et vers le côté opposé au sens d'avancement (A) de la machine, en vue de permettre à la fourchette de déposer la motte sur le fond du sillon.

9. Machine suivant l'une quelconque des revendications précédentes, caractérisée par le fait que les dents (12) de la fourchette (8) comprennent une partie sensiblement horizontale, destinée à soutenir les mottes, et, sur le côté tourné dans le sens d'avancement (A) de la machine, une partie sensiblement verticale, d'une hauteur au moins égale à la profondeur d'enfoncement des dents (12) dans le fond du sillon.

10. Machine suivant l'une quelconque des revendications précédentes, caractérisée par le fait que le soc (4) qui ouvre le sillon comporte plusieurs patins de tassement (24) qui sont orientés dans le sens d'avancement de la machine et dont chacun est aligné avec une dent (12) de la fourchette (8).

# FIG.1

1/2

0116252

# FIG.2

# FIG.3

Office européen
des brevets

**RAPPORT DE RECHERCHE EUROPEENNE**

EP  83 40 2554

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A- 637 693 (LAROQUE-LATOUR) <br><br> * Page 1, lignes 40-62; page 2; page 3, lignes 1-56; figures 1,2,3,4 * | 1,4,6, 7,10 | A 01 C  11/02 |
| | --- | | |
| A | FR-A-1 186 862 (VYZKUMNY USTAV) <br> * Page 2, colonne de droite, paragraphes 3,4; page 3; page 4; page 5, colonne de gauche, paragraphes 1,2; figures 1-21 * | 1,5,6 | |
| | --- | | |
| A | FR-A-1 297 562 (CAPELLA) | | |
| | --- | | |
| A | US-A-2 514 522 (SHELTON) | | DOMAINES TECHNIQUES RECHERCHES (Int. Cl. ³) |
| | ----- | | A 01 C |

Le présent rapport de recherche a été établi pour toutes les revendications

| Lieu de la recherche | Date d'achèvement de la recherche | Examinateur |
|---|---|---|
| LA HAYE | 11-04-1984 | VERMANDER R.H. |